# EUROPEAN PATENT APPLICATION

(11) **EP 1 936 916 A2**
(43) Date of publication of application: **25.06.2008**
(21) Application number: 07122907.4
(22) Date of filing: 11.12.2007
(51) Int. Cl.: H04L 29/06

(54) **Network-implemented method using client's geographic location to determine protection suite**

(30) Priority: 22.12.2006 US 644756
(71) Applicant: AT&T Corp., New York, NY 10013-2412 (US)
(72) Inventor: Hutnik, Stephen M., Hawthorne, NY 10532 (US); Peri, James G., Jr., Byron, CA 94514 (US); Satterlee, Michael J., Clifton Park, NY 12065 (US)
(74) Representative: Asquith, Julian Peter

(57) **Abstract**

A server is adapted to communicate with client devices using a selected one of a plurality of alternative protection suites. The server receives from a terminal device information that identifies an offered list of protection suites supported by the terminal device. A particular one of the protection suites that is supported by both the server and the terminal device is selected by the server in a deterministic way. If use of a particular protection suite is prohibited by law in the geographical region where the terminal device is located, the server selects a different matching protection suite in substitution for the protection suite that it otherwise would have selected. The server identifies the selected protection suite to the terminal device and thereafter communicates with the terminal device based on the parameter values in the protection suite.

## Description

### Background

The present invention relates to communications networks, such as virtual private networks.

One of the main concerns for users of a virtual private network is security of data, especially when the data transverses a public network, such as the Internet. Encryption is one way to protect data. IPSec (which is short for IP Security) is a collection of protocols developed by the Internet's main standards organization, the Internet Engineering Task Force, to support secure exchange of packets at the IP layer of the TCP/IP stack over a public network. Those protocols are described in at least the following documents, which are hereby incorporated by reference as though fully set out herein: www.ietf.org, http://www.rfc-editor.org/, RFC 2406 ftp://ftp.rfc-editor.org/in-notes/rfc2406, RFC 2407 ftp://ftp.rfc-editor.org/in-notes/rfc2407, RFC 2408, ftp://ftp.rfc-editor.org/in-notes/rfc2408.txt RFC 2409 - ftp://ftp.rfc-editor.org/in-notes/rfc2409.txt, RFC 4306 ftp://ftp.rfc-editor.org/in-notes/rfc4306,

IPSec has, in particular, been deployed widely to provide secure service in implementing virtual private networks. IPSec virtual private networks can be classified into two categories-site-to-site virtual private networks and remote access virtual private networks. Remote access virtual private network users use these connections for business continuity. These users include telecommuters and business travelers, who rely on this type of connectivity in order to securely access mission-critical data whatever the user's geographic location.

IPSec allows for several symmetric encryption algorithms, including DES, 3DES and AES. The difference among these algorithms is the block- and key sizes. DES and 3 DES have a block size of 64 bits, meaning that 64 bits (8 bytes) can be encrypted in one run of the encryption algorithm, while AES has a block size of 128 bits. DES uses keys of 56 bits in its basic form, 3DES has a key size of 168bits (3 independent 56 bit keys) and AES supports keys of at least 128 bits. The longer the key length,the greater the number of possible keys that can be used and thus the stronger the encryption, meaning the harder it is to crack the encoding by brute force attacks.

Not all countries permit the use of all encryption algorithms. Legal restrictions in some countries permit only certain encryption algorithms to be used because of the difficulty of conducting effective surveillance (e.g., wiretaps) when communications are encrypted with particularly powerful algorithms. This presents a challenge for traveling users connecting to VPN gateways outside of the country they are in. Traveling users based in the United States would usually want to use the most secure of the three abovementioned algorithms-AES-when in the United States. But when users travel to a country where AES is not permitted, they need to downgrade to a lower encryption strength to comply with local legal restrictions or requirements.

Such downgrading can be readily accomplished within the context of an IPSec environment or other communications protocol. In IPSec, using that as an example, the user's terminal device, or IPSec client, initiates the negotiation of security parameter values by sending an Offer to an IPSec server (gateway) in a so-called "security association payload." The client is thus sometimes referred to in this context as the "initiator." The Offer includes a list of so-called "protection suites" comprising the values of one or more security parameters that control at least one aspect of the communication, specifically the security of the communication. Each protection suite comprises the identification of a) a particular IPSec protocol , b) a particular encryption algorithm (also referred to as a "transform") and c) other protection attributes or parameters such as the Diffie-Hellman group, hashing parameters, etc. The identification of the particular protocol, encryption algorithm or other parameter is referred to herein as the "value" of that parameter.

The IPSec server supports its own list of server-supported protection suites. Some of the protection suites supported by the server may be different from the protection suites supported by the client, but typically there is at least one match. Responsive to the Offer, the server selects in a deterministic way which of the protection suites supported by both the client and the server is to be used for the session. For example, in current practice the protection suites supported by the server have an order of preference and the server uses a particular methodology to identify a preferred protection suite for use during the communication session. Typically that methodology identifies as the preferred protection suite the server's highest ranking protection suite that is contained in the Offer. The server thereupon passes a Proposal (called the "IKE Proposal" in the IPSec environment) back to the client identifying the particular protection suite that will be used for the session. The server is thus sometimes referred to in this context as the "responder." The security negotiation continues thereafter, including the negotiation of an encryption key. Communications thereafter proceed based on the parameter values of the selected protection suite, negotiated key and other fixed or negotiated parameter values.

Ensuring that the communications conform to local law can, then, be a very simple matter. A user can configure the client device's communication options, such as via check-boxes on a user-interface screen or the like, so as to disable in the client any protection suites (also sometimes referred to as "policies") incorporating parameter values that would cause local law to be violated, e.g., a non-permitted encryption algorithm or possibly other non-permitted protection parameter value(s). Thus the Offer includes only protection suites whose use would not violate local law, guaranteeing that the protection suite ultimately selected by the server and specified in the Proposal is not one that violates local law.

### Summary of the Invention

While the above approach is simple and straightforward, we have recognized that further improvements are possible.

In an illustrative embodiment of the invention, a first entity, or responder (such as the IPSec server of the above example), uses the geographic location of a second entity, or initiator (such as the IPSec client), to modify what would otherwise be the responder's choice of protection suite for the session in the event that that choice includes anything whose use would cause impermissible communications-for example, communications that would violate local law such as by using a particular encryption algorithm. Thus if the protection suites supported by the initiator include a particular protection suite incorporating the AES encryption algorithm, for example, then even if that protection suite would otherwise be the responder's first-preferred protection suite, the responder will specify in the Proposal another protection suite from among those offered by the initiator-one that does not include any non-permitted protection parameter values.

More generally, the invention encompasses implementations in which the protection suites include multiple parameters less than all of which relate to communication security. The invention also encompasses implementations in which the protection suites may include only a single security parameter, e.g. just an encryption standard or just a Diffie-Hellman group. In addition, the invention more generally encompasses implementations in which the parameters in question control at least one aspect of the communication, whether or not at least one aspect of the communication relates to security or protection.

The initiator could possibly determine its own geographic location using GPS, for example, and could report that location to the server, which would then be responsible to limit the selected protection suite to a protection suite not violating local law. In particular embodiments of the invention, however, the responder determines the location of the initiator based on an originating address contained within communications, e.g., packets, from the initiator. For example, since IP-address-to-country mapping data is readily available, the location of an initiator can be determined in an IP environment from, for example, the Layer 3 IP address contained in packets received from the initiator.

There are a number of advantages to the invention. It pushes the intelligence about local law up into the network, freeing the user from having to know the local law. Moreover, in embodiments where the network determines the location of the initiator based on the latter's IP, or other, address, the initiator does not need to be configured to identify its geographic location or to communicate that location to the network. Thus the use of a protection suite that is in conformance with local legal requirements is achieved without any changes being necessary in the initiator device or its protocol software.

The prior art is well aware of arrangements in which the use of particular encryption algorithms by a terminal device is automatically controlled based on the terminal device's location. See, for example, the following United States Patents: 6,470,447 issued Oct. 22, 2002 to Lambert et al; 5,781,628 issued Jul. 14, 1998 to Alperovich et al, which disclose that notion in the wireless communications (e.g., cellular telephony) context. However it remained for the present applicants to recognize, for example, the desirability of using a client's geographic location to modify the manner in which protocol suite matching is carried out.

### Brief Description of the Drawing

FIG. 1 is a conceptual view of a network that includes a virtual private network (VPN) in which the invention is implemented;

FIG. 2 shows communications between a VPN client and a VPN server shown in FIG. 1;

FIG. 3 is a flowchart of a process implemented by a responder-illustratively the VPN server of FIG. 1-in furtherance of implementing the invention;

FIG. 4 is a conceptual flowchart of a process implemented by a policy server within the network of FIG. 1 in furtherance of implementing the invention; and

FIG. 5 shows the standard structure of the IP header in packets communicated between the VPN client and VPN server of FIG. 1.

### Detailed Description of Illustrative Embodiments

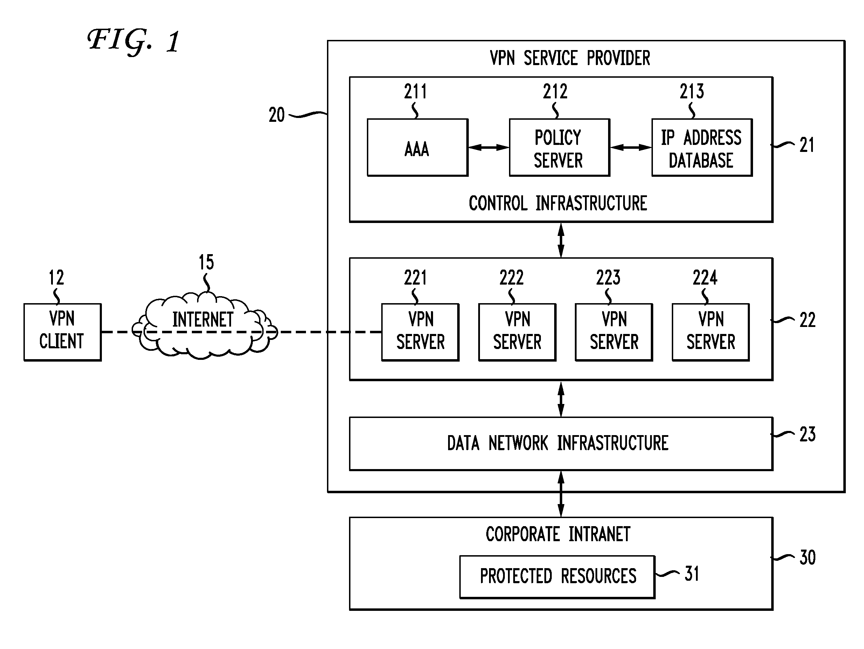

FIG. 1 is a conceptual view of a network in which the invention is implemented. As shown, a virtual private network (VPN) client 12 has access to a VPN service provider 20 via an unsecured public IP network-illustratively the Internet 15. Service provider 20 includes a number of VPN servers 22 functioning as gateways to the virtual private network. Four VPN servers 221 through 224 are shown. VPN servers 22 are connected to the service provider's data network infrastructure 23 which connects to a secure/trusted IP network. The latter is illustratively a corporate intranet 30 that is a customer of service provider 20. Intranet 30 includes protected resources 31, such as internal servers, databases etc. As described below, this arrangement provides a secure communication channel between client 12 and selected ones of the resources 31 via Internet 15, VPN server 221 and data network infrastructure 23. Once the secure channel has been set up, secure authentication of user and group information can take place.

VPN servers 22 also have access to service provider control infrastructure 21, which includes AAA (authentication, authorization, accounting) server 211, policy server 212 and IP address database (DB) 213. When the user at client 12 wishes to access one or more of the resources 31, a communication session is initiated over Internet 15 to a particular one of VPN servers 22-illustratively VPN server 221. The communication channel between VPN server 221 and resources 31 is a secure one, being controlled by the service provider and/or the corporation that owns the corporate intranet. However, the channel from client 12 to VPN server 221 is insecure inasmuch as it traverses a public network, viz., the Internet.

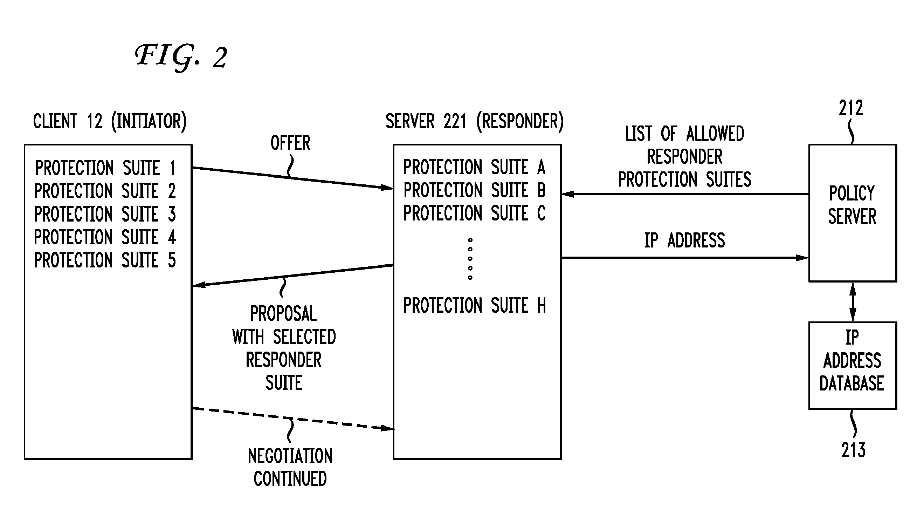

In order to achieve security for communications between client 12 and VPN server 221 over the Internet, the client and server communicate in this example using the IPSec standard. To this end, a number of so-called protection suites (also sometimes referred to as "policies") are defined within client 12. As shown in FIG. 2, client 12, also called the "initiator," has been configured to support five such protection suites, referred to as Protection Suites 1, 2, 3, 4 and 5. Each protection suite comprises a set of parameter values that achieve a particular level of security for Internet communications. Specifically, a protection suite is illustratively made up of the following parameters: a) Identification of a particular IPSec protocol, b) identification of a particular encryption algorithm, and c) other protection attributes such as the identification of a particular Diffie-Hellman group and hash. By way of example, protection suite 1 may include, among other things, the following parameter values: a) the IKE SA protocol, b) AES encryption, c) Diffie-Hellman group5, and d) SHA-1. Protection suite 2 may be made up of, among other things, the following parameter values: a) IKE SA protocol, b) 3DES encryption c) Diffie-Hellman group 2 and d) SHA-1 Hash. The various protection suites may have overlapping characteristics. For example, protection suite 3 may comprise the IKE SA, protocol 3DES encryption (like protection suite 2), Diffie-Hellman group2 (like protection suite 2), and also include the MD5 hash. Policies will be configured to meet the various security needs.

Client 12 initiates a negotiation with VPN server 221-also referred to herein as the "responder"-as to which protection suite will be used for the session. Specifically, as shown in FIG. 2, client 12 transmits a so-called Offer containing a list of the initiator protection suites that client 12 has been configured to use. The protection suite list contained in the Offer specifies the set of parameter values that make up each particular protection suite.

VPN servers 22 have been configured to use any of, in this example, 8 "responder" protection suites A, B, C, ...H The difference in the designations 1, 2, 3... for the initiator protection suites and the designations A, B, C, ... for the responder protection suites are just simply that-designations. In general, at least one of the initiator protection suites is the same as at least one of the responder protection suites. For example, responder protection suite C may comprise a) the ISAKMP SA protocol, b) AES encryption, c) and Diffie-Hellman group2. That is, responder protection suite C may be the same as initiator protection suite 1. VPN server 221 selects a particular one of its protection suites that matches one of the initiator protection suites and it identifies that protection suite to client 12 in a so-called "Proposal," referred to as the IKE Proposal in the IPSec environment. Typically the responder protection suites have an order of preference and, putting aside for the moment questions of certain protection suites being legally impermissible, the responder specifies in the Proposal its highest-ranking protection suite that matches an initiator protection suite listed in the Offer. Thus in the example just given, if protection suite C is the most-preferred responder protection suite from among those that match with the initiator protection suites specified in the Offer, then the Proposal will specify protection suite 1 in the Proposal.

As further shown in FIG. 2, further negotiations such as negotiation of an encryption key to be used for the session, are thereafter carried onContinuing with the above example, it may be that the country where client 12 is currently situated does not permit AES encryption to be used. In such a case, the protection suite negotiated between the client and the server cannot be one that includes AES. If VPN server 221 were also located in that country, there would be no problem because VPN server 221 will not have been configured with any protection suites that include AES. However, VPN server 221 may be in a different country. For example, client 12 may be in India, which currently does not permit the use of AES, while VPN server 221 may be in the United States where AES is permitted. Thus in communicating with the United States-based server, client 12 would be in violation of Indian law if s/he used protection suite 1, for example, in that s/he would be causing AES to be used over a portion of the Internet physically situated within India.

Today, users can achieve conformance to local law by disabling all initiator protection suites (such as via menus or options screens) that include non-permitted encryption algorithms. In the present example, this would mean that the Offer would not contain initiator protection suite 1 or any other protection suite that includes AES. Even though VPN server 221's most-preferred responder protection suite may include AES, server 221 would find no match for any such protection suites in the Offer, thereby guaranteeing that whatever matching protection suite is found, it will not be one that includes AES.

Disadvantageously, however, such an approach requires that the user be knowledgeable in the local requirements and b) remember to disable the problematic protection suites within his laptop when entering a particular country having legal restrictions on encryption or other parameters. It is inconvenient for users to have to keep a list of local legal requirements. Moreover, the user may well forget to change the computer's options as s/he travels from one country to the next. The client itself could be configured to do this task based on a determination of the client's location using GPS, for example. That approach, however, would require that additional appropriate software be loaded into the client including, probably, automatic accessing of a central database in order to have up-to-date information about countries' legal requirements.

In accordance with the present invention, all of this is taken care of at the responder's end. In particular, the responder uses the client's location as the basis on which to exclude from matching consideration any protection suite whose use would violate the law in the country where the client is situated. This approach, advantageously, pushes the intelligence up into the network, freeing the user from both having to a) know local law and b) remember to reconfigure his computer as he moves from country to country, and/or eliminating the need for the client itself to be configured to perform the necessary functions.

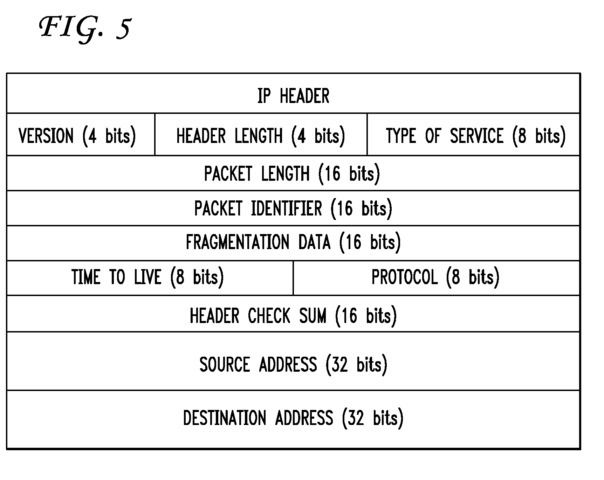

The invention could be implemented in such a way that the client device determines its location using, for example, GPS and then reports its latitude and longitude to the server which can then determine the client's current country location using table lookup and thereafter exclude any protection suite whose use would violate the law in the country where the client is situated, as stated above. In accordance with a feature of the invention, however, the entire process is made transparent to the client by the responder determining the location of the initiator based on an originating address contained within communications from the initiator-in this example, the initiator's IP address assigned to client 12 by the local Internet service provider. IP-address-to-country mapping data is readily available. Thus the location of the client can be determined in an IP environment from, for example, the Layer 3 IP address contained in packets received from the initiator. FIG. 5 shows the standard IP header format containing, as one of its fields, the packet's Source Address.

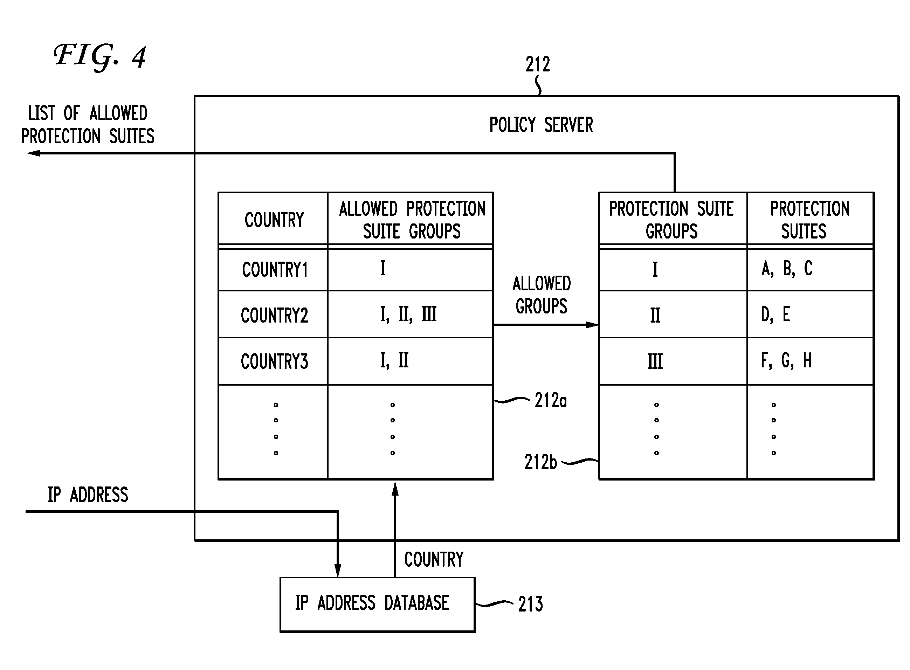

In the present disclosed illustrative embodiment, VPN server 221 accesses policy server 212 in support of the process. Policy server 212, in turn, accesses IP address database 213, as described below in connection with the description of FIG. 4. For the present, it suffices to note from FIG. 2 that VPN server 221 obtains the client's IP address from the IP header and sends it to policy server 212. The latter determines the country location from the IP address database and responds by providing VPN server 221 with a list of allowed responder protection suites. For example, if responder protection suites A through E included DES as their encryption algorithm and local law only permitted DES to be used, then the list of allowed responder protection suites provided to VPN server 221 from policy server 212 would include only those protection suites A through E and VPN server 221 would then be limited to those five protection suites in finding a match with the protection suites contained within the Offer.

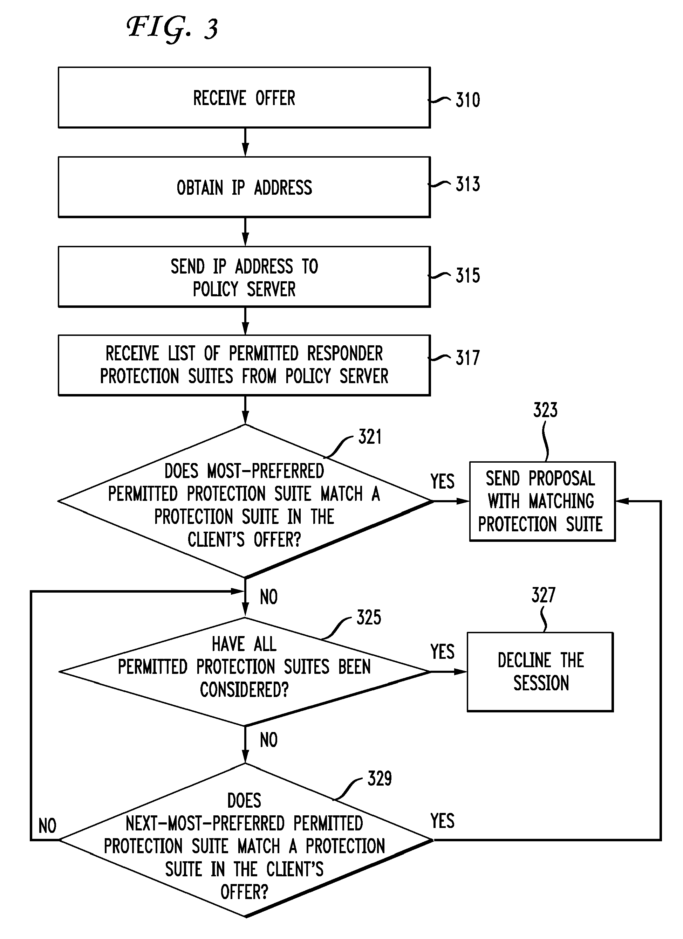

FIG. 3 is a flowchart of a process implemented by VPN server 221 to carry out its part of the functions just described. Specifically, once the Offer is received (310) the client's IP address, contained in each packet of the Offer, is obtained from the IP header (313). That address is sent to policy server 212 (315) and, in response, VPN server 221 receives the list of allowed responder protection suites (317). Recall that the entire collection of responder protection suites contained within VPN server 221 has an order of preference, and it is now determined (321) whether the most-preferred protection suite from among those on the allowed list matches an initiator protection suite in the Offer. If yes, then the VPN server sends a Proposal identifying the matching initiator protection suite (323) and the process depicted in FIG. 3 is done.

If the most-preferred protection suite from among those on the allowed list does not match an initiator protection suite in the Offer, it is determined (325) whether all the protection suites in the allowed list have been considered. If yes, then there will be no match and the VPN server declines the session (327). If not all of the protection suites in the allowed list have been considered, however, it is determined (329) whether the next-most-preferred protection suite from among those on the allowed list matches an initiator protection suite in the Offer. If yes, then a Proposal identifying *that* matching initiator protection suite is sent (323). Otherwise, it is again asked (325) whether all the protection suites in the allowed list have been considered and the process continues until either a) a match is found or b) the session is declined.

FIG. 4 is a conceptual flowchart of a process implemented by policy server 212 to carry out its part of the functions just described.

Stored within policy server 212 are two tables. Table 212b categorizes the responder protection suites A through H into protection suite groups. In this example, it is assumed that the only aspect of the protection suites regulated by law is the encryption algorithm. Thus assuming that each of the responder protection suites includes one of three encryption algorithms (e.g., DES, 3DES and AES), it is convenient and possible to group the responder protection suites into three groups: I, II and III. The protection suites that include DES are illustratively protection suites A through C and are in group I. The protection suites that include 3DES are illustratively protection suites D and E and are in group II. The protection suites that include AES are illustratively protection suites F through H and are in group IIII. Table 212a lists each country in the world and, for each country, the table indicates which of the three protection suite groups are allowed to be used.

In operation, then, policy server 212 receives the initiator's IP address from VPN server 221. Policy server 212 uses the address to query IP address database 213 and receives therefrom an identification of the country where the device having that address (i.e., client 12) is located. Policy server 212 thereupon determines from table 212a which of the protection suite groups are permitted by local law. That determination is then used to access table 212b to create the aforementioned list of allowed protection suites that is sent to VPN server 221. It would, of course, be possible to not divide the responder protection suites into groups. One could, rather, list the allowed protection suites for each country directly in table 212a and eliminate table 212b. The approach shown in FIG. 4 does, however, provide for somewhat simpler ongoing maintenance of the data to make changes when a) a country changes its laws about what encryption algorithms are permitted and/or b) a new responder protection suite is defined.

The foregoing merely illustrates the principles of the invention and many variations are possible, as is discussed in the following paragraphs.

The invention is presented in the context of an IP-based system and IP protocols, including IPSec. However, the principles of the invention could be applied to other types of communication protocols now known or that might be developed in the future.

Even within an IP and IPSec context, variations are possible, particularly in the sequencing and/or content of various messages passed back and forth between the client and server and therefore in when, where and how protection suite information is passed back and forth. More particularly, the invention has tacitly been illustrated herein in the context of so-called aggressive mode IPSec in which identity protection is not needed and the round trips required to negotiate is reduced. The principles of the invention are applicable within the IPSec context to other "forms" of IPSec such as so-called main mode. The differences among these forms of IPSec might make it desirable to modify the details of how the invention is carried out.

In that same vein, it is to be noted that the invention is presented in the context of so-called phase 1 IKE negotiation in which particular parameter values discussed above, e.g., encryption algorithm, are negotiated. However, the invention can also be used when other parameters are negotiated during, for example, so-called phase 2 negotiation.

Some or all of the functions performed by policy server 212 could be, instead, performed within VPN server 221 or vice versa. Specifically, the initiator protection suite list contained in the Offer could be forwarded by VPN server 221 to policy server 212, and policy server 212 could then perform the matching functionality presented in FIG. 3. An advantage of that approach would be that the multiple VPN servers that would typically be included within a given virtual private network would not all have to be updated with information about newly defined responder protection suites.

The invention is presented in a virtual private network context. However, the principles of the invention are more widely applicable to other types of networks.

The invention is presented as a way of enabling client-transparent conformance with local law in regard to encryption algorithms. However, the principles of the invention are more widely applicable and can be used in situations where local law regulates aspects of communications other than encryption, such as, perhaps, non-encryption-related protocols, hash, lifetime or authentication. The term local law as used herein is intended to include not just so-called "laws" per se but to restrictions or requirements that are akin to laws, such as regulations, orders, directives, rules, etc. Moreover, the invention can be used in environments in which particular parameter values are deemed impermissible for reasons other than local laws, such as when a private or quasi-private entity from whose facilities the client is accessing the server imposes restrictions or requirements on the use of particular parameter values.

If at some point in the future protection suites themselves are standardized, there would be no need for entities such as the VPN client and VPN server of the illustrative embodiment to specify the content of their various supported protection suites. It would be adequate in such cases for them to specify the name or some other kind of designator for the protection suites.

The terms Offer and Proposal used herein are intended to be understood in their broadest aspects as simply labels for exchanges between the endpoint entities, e.g., client and server. The use of those terms herein is thus not intended to limit the invention to any particular format or protocol, e.g., IPSec.

It will thus be appreciated that the embodiments shown and/or described herein are merely illustrative. Those skilled in the art will be able to devise numerous alternative arrangements and processes that while not explicitly shown or described herein embody the principles of the invention and are thus within its spirit and scope.

## Claims

1. A method for use by a first entity adapted to communicate with other entities using a selected one of a plurality of supported values of at least one parameter that controls at least one aspect of the communication, the method comprising,
receiving an Offer from a second entity that contains offered values for the parameter, and
transmitting a Proposal to the second entity that identifies as the selected value one of the offered values that is also one of the supported values,
the selected value being a) a particular one of the offered and supported values as long as communications with the second entity using that particular value would be permissible at the second entity's location and b) a different one of the offered and supported values otherwise.

2. The method of claim 1 wherein the at least one parameter is a security parameter.

3. The method of claim 2 wherein the security parameter is an encryption algorithm.

4. The method of claim 3 wherein values of the security parameter are identifiers of respective encryption algorithms.

5. The method of claim 1 wherein said different one of the offered and supported values is such that communications with the second entity would not be impermissible at the second entity's location as a result of said selected value being said different one of the offered and supported values.

6. The method of claim 1 wherein said first entity is a network server and said second entity is a client of the server.

7. The method of claim 1 wherein said first entity is a virtual private network gateway, said second entity is a client of said virtual private network, and communications between said gateway and said client traverse a public network.

8. The method of claim 7 wherein said public network is the Internet.

9. The method of claim 1 wherein said receiving an Offer and said transmitting a Proposal conform to at least one IPSec protocol.

10. The method of claim 1 wherein said impermissible communications are communications that would violate any legal restriction wherein the second entity is located.

11. The method of claim 1 wherein
said supported values have an order of preference,
said particular one of the offered and supported values is selected based on said order of preference, and
said different one of the offered and supported values is lower in said order of preference than said particular one of the offered and supported values.

12. A method for use by a server adapted to communicate with clients in a manner defined at least in part by a selected one of a plurality of suites each comprising one or more server-supported values of respective parameters, the method comprising,
receiving an Offer from a client that contains two or more offered suites of values for the parameters, and
transmitting a Proposal to the client that identifies as the selected suite one of the offered suites that is also one of the suites of server-supported values,
the selected suite being a preferred one of the offered and server-supported suites determined based on an order of preference of the server-supported suites except when use of said preferred suite would cause communications with the client to violate one or more legal restrictions, in which case the selected suite is a different one of the offered and server-supported suites whose use would not cause communications with the client to violate said one or more legal restrictions.

13. The method of claim 12 wherein at least one of the parameters is a security parameter.

14. The method of claim 13 wherein the security parameter is an encryption algorithm.

15. The method of claim 14 wherein each value of said one of the parameters is an identifier of a respective different encryption algorithm.

16. The method of claim 12 wherein said server is a virtual private network gateway, and communications between said gateway and said client traverse a public network.

17. The method of claim 16 wherein said public network is the Internet.

18. The method of claim 16 wherein said receiving an Offer and said transmitting a Proposal conform to at least one IPSec protocol.

19. The method of claim 1 wherein
said preferred one of the offered and server-supported suites is the one of the offered suites that is highest in said order of preference and said different one of the offered and server-supported suites is lower in said order of preference than said preferred suite.
